# EUROPÄISCHE PATENTSCHRIFT

(11) **EP 0 521 313 B1**
(45) Veröffentlichungstag und Bekanntmachung des Hinweises auf die Patenterteilung: **29.03.1995**
(21) Anmeldenummer: 92109563.4
(22) Anmeldetag: 05.06.1992
(51) Int. Cl.: F04D 25/06, F04D 25/08, F04D 29/66, H02K 9/22, H02K 5/24

(54) **Doppelseitig saugender Radialventilator**
Double suction radial flow blower
Ventilateur radial aspirant des deux côtés

(30) Priorität: 03.07.1991 DE 4121927
(43) Veröffentlichungstag der Anmeldung: 07.01.1993
(73) Patentinhaber: ebm Elektrobau Mulfingen GmbH & Co., D-74671 Mulfingen (DE)
(72) Erfinder: Reinhardt, Wilhelm, W-7187 Schrozberg-Gütbach (DE); Neckermann, Markus, Dipl.-Ing. (FH), W-6990 Bad Mergentheim (DE)
(74) Vertreter: Patentanwälte Dr. Solf & Zapf

(56) Entgegenhaltungen:
- CH-A- 363 119
- DE-B- 1 021 974
- DE-B- 1 175 785
- FR-A- 2 500 966
- US-A- 2 830 752

## Beschreibung

Die vorliegende Erfindung betrifft einen doppelseitig saugenden Radialventilator, bestehend aus einem Gehäuse mit zwei gegenüberliegenden Einlaßöffnungen, einem etwa mittig zwischen den Einlaßöffnungen in dem Gehäuse angeordneten Elektro-Außenläufermotor mit einem Stator und einem Rotor sowie aus einem mit dem Rotor zur Rotation um eine durch die Einlaßöffnungen verlaufende Rotationsachse verbundenen, den Motor beidseitig in Richtung der Einlaßöffnungen axial überragenden Radial-Laufrad, wobei der Motor elastisch an dem Gehäuse abgestützt ist.

Bei derartigen Ventilatoren, bei denen ein zu förderndes Medium, insbesondere Luft, beidseitig axial durch die Einlaßöffnungen angesaugt und dann durch das Laufrad radial beschleunigt und ausgeblasen wird, treten in der Regel aufgrund von elektrischen und/oder mechanischen Unsymmetrien im Bereich des Motors und/oder aufgrund von mechanischen Unwuchten des Motors und/oder des Laufrades Schwingungen auf. Außerdem besteht oft die Notwendigkeit, die Drehzahl des Ventilators durch eine Phasenanschnittsteuerung des Motors zu regeln. Hierdurch treten zusätzliche, durch hochfrequente Oberwellenschwingungen bedingte Schwingungen auf. Wenn sich die Schwingungen auf das Gehäuse übertragen, so führt dies zu einer sehr nachteiligen Geräuschentwicklung, und zwar insbesondere in dem Fall, wenn die jeweilige Schwingungsfrequenz im Bereich der Resonanzfrequenz des Gehäuses liegt. Es ist daher erforderlich, den Motor zur Schwingungsdämpfung vom Gehäuse zu "entkoppeln", d.h. elastisch am Gehäuse abzustützen.

Ein gattungsgemäßer Ventilator ist aus der US-PS 2 830 752 bekannt. Hierbei ist der Motor über eine starr mit dem Stator verbundene, d.h. nicht rotierende Hohlachse abgestützt, die sich beidseitig über den den Stator vollständig umschließenden Rotor hinaus erstreckt und mit jedem Ende verdrehfest in einen schwingungsdämpfenden Gummiblock eingreift. Jeder Gummiblock ist über Speichenelemente zentrisch im Bereich einer der Einlaßöffnungen gehalten. Der Rotor ist über zwei Drehlager auf der Hohlachse gelagert. Bei diesem bekannten Ventilator ist nachteilig, daß die Abfuhr der im Stator entstehenden (Strom-)Wärme Probleme bereiten dürfte, da der Stator allseitig vom Rotor umgeben ist. Deshalb muß je nach Anwendungsfall sicherheitshalber eine größere Baugröße des Motors, d.h. ein höher belastbarer Motor, verwendet werden. Dies bringt aber einerseits höhere Kosten mit sich und hat zudem andererseits auch einen nachteiligen Einfluß auf das Fördervolumen des zu fördernden Mediums, da eine Vergrößerung des Motors zu einer Reduzierung des Strömungsquerschnittes führt, was - um ein vorgegebenes Fördervolumen zu erreichen - eine Erhöhung der Drehzahl erforderlich macht. Dies führt aber nachteiligerweise auch zu einer weiteren Geräuschzunahme.

Die DE-PS 1 175 785 beschreibt eine Lagerung für einen elektrischen Kleinmotor, der als Antriebsmotor allgemein, in einer Ausführungsform aber auch zum Antrieb von zwei beidseitig des Motors angeordneten Lüfterrädern Verwendung findet. Hierbei ist der Motor ebenfalls elastisch über Gummielemente an einem Traggestell abgestützt, und zwar besitzt der Motor einen Statorflansch, der unmittelbar über ein Gummielement mit einem ersten Haltebock des Traggestells verbunden ist, und der Rotor besitzt eine verlängerte, sich in die dem Statorflansch abgekehrte Richtung erstreckende Welle, die in einem Drehlager geführt ist, welches über ein Gummielelement in einem zweiten Haltebock des Traggestells gehaltert ist. Diese bekannte Lagerung eignet sich nun aber nicht für einen doppelseitig saugenden Radialventilator der gattungsgemäßen Art, bei dem ja der Motor "innerhalb" des Laufrades angeordnet ist und das Radial-Laufrad den Motor beidseitig axial überragt, so daß eine Befestigung des Statorflansches nach Art des bekannten Motors nicht ohne weiteres möglich wäre.

Es sind weiterhin doppelseitig saugende Radialventilatoren bekannt, bei denen der Motor nur einseitig, d.h. "fliegend", über Haltearme (sog. "Befestigungsspinne") an einer Seitenwand des Gehäuses befestigt ist. Hierzu erstrecken sich die Haltearme ausgehend vom Motor im wesentlichen axial in Richtung einer der Einlaßöffnungen und sind mit ihren radial nach außen weisenden Enden im die Einlaßöffnung umschließenden Bereich der Seitenwand des Gehäuses mit diesem verschraubt. Eine derartige Anordnung eignet sich nur für Motor-Laufrad-Einheiten mit relativ geringem Gewicht und ist zudem auch nur ohne elastische, schwingungsdämpfende Abstützung möglich, da es ansonsten aufgrund von Verformungen der Haltearme und/oder von elastischen Dämpferelementen zu Lageveränderungen des Motors bzw. des Laufrades kommen könnte, was aber ein mit starken Geräuschen verbundenes Schleifen oder gar ein Blockieren des Laufrades zur Folge haben kann.

Der vorliegenden Erfindung liegt nun die Aufgabe zugrunde, einen doppelseitig saugenden Radialventilator der eingangs beschriebenen, gattungsgemäßen Art zu schaffen, bei dem unter Beibehaltung der elastischen, auch für schwere Motor-Laufrad-Einheiten geeigneten Aufhängung des Motors eine gute Wärmeabfuhr aus dem Stator gewährleistet ist.

Erfindungsgemäß wird dies dadurch erreicht, daß der Stator mit einem Statorflansch verbunden ist, wobei der Rotor den Stator nur von einer Seite her etwa bis zu dem Statorflansch umschließt, und daß zur Abstützung des Motors einerseits eine mit dem Rotor rotierende, über den Motor hinaus axial verlängerte Welle in einem über ein elastisches Dämpferelement am Gehäuse gehaltertes Drehlager geführt und andererseits der Statorflansch unmittelbar metallisch, wärmeleitend mit einem ein im Strömungsweg eines zu fördernden Mediums liegendes Kühlelement bildendes Flanschverlängerungselement verbunden und über dieses elastisch sowie gegen Verdrehen gesichert am Gehäuse gehaltert ist.

Erfindungsgemäß ist somit der Motor bzw. dessen Rotor zur Wärmeabfuhr einseitig offen ausgebildet, so daß die im Stator entstehende Wärme vorteilhafterweise über den mit dem Statorblechpaket in Verbindung stehenden Statorflansch und das erfindungsgemäße Flanschverlängerungselement sehr effektiv an das zu fördernde Medium (insbesondere Luft) abgegeben wird, denn das Flanschverlängerungselement liegt zumindest bereichsweise im Strömungsweg des Mediums und bildet so ein Kühlelement. Dabei kann die Effektivität der Wärmeabfuhr bzw. der Kühlung noch verbessert werden, indem erfindungsgemäß das Flanschverlängerungselement seine Oberfläche vergrößernde, insbesondere rippenartige Kühlansätze (Kühlrippen) aufweist. Aufgrund der doppelten elastischen Abstützung des Motors eignet sich die erfindungsgemäße Aufhängung auch für schwere Motor-Laufrad-Einheiten, wobei die auftretenden Schwingungen effektiv gedämpft werden, d.h. eine Übertragung der im Bereich des Motors und/oder des Laufrades entstehenden Schwingungen auf das Gehäuse wird vermieden.

Weitere vorteilhafte Ausgestaltungsmerkmale der Erfindung sind in den Unteransprüchen sowie der folgenden Beschreibung enthalten.

Anhand von mehreren in der Zeichnung dargestellten Ausführungsbeispielen eines erfindungsgemäßen Radialventilators soll im folgenden die Erfindung näher erläutert werden. Dabei zeigen:
- Fig. 1: einen Teil-Axialschnitt eines erfindungsgemäßen Radialventilators in einer ersten Ausführungsform,
- Fig. 2 bis 5: jeweils stark vereinfachte, schematische Axialschnitte von weiteren, verschiedenartigen Ausführungsformen des erfindungsgemäßen Radialventilators,
- Fig. 6: ein elastisches Dämpferelement zur Halterung eines Drehlagers für die mit dem Rotor rotierende Welle in einer der Fig. 1 entsprechenden Schnittdarstellung (Bereich VI in Fig. 1) bzw. im Schnitt längs der Linie VI-VI in Fig. 7 und
- Fig. 7: eine Draufsicht des Dämpferelementes in Pfeilrichtung VII gemäß Fig. 6.

In den verschiedenen Figuren der Zeichnung sind gleiche bzw. gleichwirkende Teile und Komponenten stets mit den gleichen Bezugsziffern bezeichnet und werden daher in der Regel jeweils nur einmal erläutert.

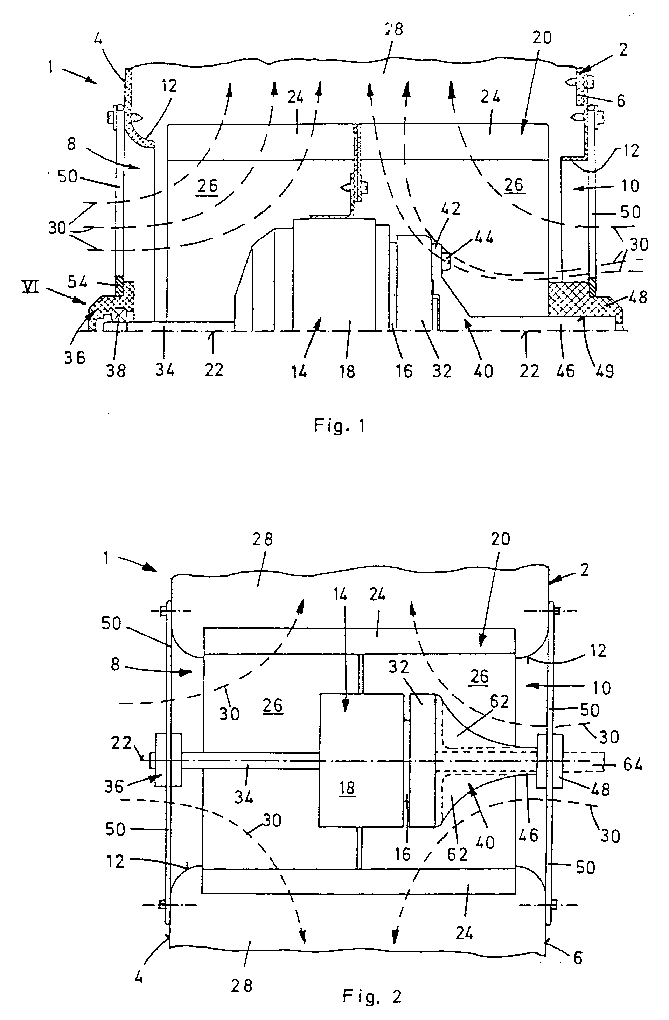

Wie sich zunächst aus Fig. 1 ergibt, besteht ein erfindungsgemäßer, doppelseitig saugender Radialventilator 1 aus einem nur teilweise dargestellten Gehäuse 2 mit zwei gegenüberliegenden, zueinander parallelen Seitenwandungen 4, 6, in denen jeweils eine Einlaßöffnung 8, 10 gebildet ist. Die Einlaßöffnungen 8, 10 sind in einer zu den Seitenwandungen 4, 6 senkrechten Richtung fluchtend, insbesondere kongruent angeordnet bzw. ausgebildet und werden vorzugsweise jeweils von einem nach innen in das Gehäuse 2 weisenden, düsenartigen Einlaufrand 12 umschlossen. Etwa mittig zwischen den Einlaßöffnungen 8, 10 ist innerhalb des Gehäuses 2 ein Elektro-Außenläufermotor 14 angeordnet, der aus einem Innen-Stator 16 und einem Außen-Rotor 18 besteht. Da der Rotor 18 den Stator 16 umgibt, ist der Stator 16 in der Zeichnung nur teilweise erkennbar. Der Rotor 18 trägt auf seiner Außenumfangsfläche ein Radial-Laufrad 20, wobei die hierdurch gebildete Motor-Laufrad-Einheit derart angeordnet ist, daß das Laufrad 20 bei Rotation des Motors 14 um eine zentrisch durch beide Einlaßöffnungen 8, 10 verlaufende Rotationsachse 22 rotiert. Das den Motor 14 beidseitig in Richtung der Einlaßöffnungen 8,10 axial überragende Radiallaufrad 20 besitzt in bekannter Weise umfänglich um die Rotationsachse verteilt angeordnete und so den Außenumfang des Laufrades 20 bildende Laufschaufeln 24, die einen zylindrischen Einlaufbereich 26 umschließen, der mit den Einlaßöffnungen 8, 10 in Richtung der Rotationsachse 22 fluchtet. Das Laufrad 20 ist von einer innerhalb des Gehäuses 2 gebildeten Spiralkammer 28 umschlossen, die eine nicht dargestellte, radiale bzw. tangentiale Ausströmöffnung besitzt. Durch die bis hierher beschriebene - soweit an sich bekannte - Ausgestaltung strömt bei Rotation des Laufrades 20 ein zu förderndes Medium, insbesondere Luft, zunächst in axialer Richtung durch die Einströmöffnungen 8, 10 in das Gehäuse 2 und in den Einlaufbereich 26 des Laufrades 20 hinein und wird dann in radialer Richtung durch die Laufschaufeln 24 beschleunigt und in die Spiralkammer 28 verdrängt, von wo es schließlich aus der nicht dargestellten Ausströmöffnung ausgeblasen wird. Dieser Strömungsverlauf ist jeweils durch gestrichelt eingezeichnete Pfeile 30 angedeutet.

Zur Schwingungsdämpfung, d.h. um zu verhindern, daß im Bereich des Motors 14 und/oder des Laufrades 20 entstehende Schwingungen auf das Gehäuse 2 übertragen und hierdurch störende Geräusche verursacht werden, ist der Motor 14 - und über diesen somit auch das Laufrad 20 - elastisch an dem Gehäuse 2 abgestützt. Um dabei auch eine effektive Kühlung des Stators, d.h. eine Abfuhr der im Stator entstehenden Wärme, zu erreichen, ist zunächst erfindungsgemäß der Stator 16 mit einem sich senkrecht zur Rotationsachse 22 erstreckenden, scheibenartigen Statorflansch 32 verbunden, wobei vorzugsweise ein metallisches Statorblechpaket des Stators unmittelbar oder über ein Wärmeleitelement, jedenfalls aber gut wärmeleitend, mit dem Statorflansch 32 verbunden ist. Der Rotor 18 ist topfartig ausgebildet und umschließt den Stator 16 nur von der dem Statorflansch 32 abgekehrten Seite her und nur etwa bis zu dem Statorflansch 32, so daß der Statorflansch 32 folglich axial außerhalb des vom Rotor 18 umschlossenen Bereichs liegt. Dabei ist erfindungsgemäß zur Abstützung des Motors 14 einerseits vorgesehen, daß eine mit dem Rotor 18 rotierende, über den Motor 14 hinaus axial verlängerte Welle 34 in einem über ein elastisches Dämpferelement 36 am Gehäuse 2 gehalterten Drehlager 38 geführt ist. Andererseits ist der Statorflansch 32 erfindungsgemäß unmittelbar metallisch, wärmeleitend mit einem sich axial vom Motor 14 weg erstreckenden Flanschverlängerungselement 40 verbunden und über dieses elastisch sowie gegen Verdrehen um die Rotationsachse 22 gesichert am Gehäuse 2 gehaltert. Das Flanschverlängerungselement 40 überbrückt erfindungsgemäß den axialen Abstand zwischen dem Statorflansch 32 und der im Bereich der Einlaßöffnung 10 bzw. der Gehäuse-Seitenwandung 6 angeordneten, mit dem Gehäuse 2 verbundenen Abstützung. Dabei bildet das Flanschverlängerungselement 40 erfindungsgemäß ein zumindest bereichsweise im Strömungsweg des zu fördernden Mediums liegendes Kühlelement, so daß es - wie durch die gestrichelt eingezeichneten Pfeile 30 deutlich wird - von dem strömenden Medium kontaktiert, d.h. überstrichen wird. Die im Stator 16 entstehende Wärme wird folglich in einer sehr effektiven Weise zunächst über den Statorflansch 32 an das Flanschverlängerungselement 40 übertragen und von diesem an das Medium abgegeben.

Bei der Ausführungsform gemäß Fig. 1 besteht das Flanschverlängerungselement 40 aus einem Verbindungsabschnitt 42, der großflächig unmittelbar oder über eine spezielle Wärmeübertragungsschicht (nicht dargestellt), jedenfalls aber gut wärmeleitend, auf dem Statorflansch 32 aufliegt und mit diesem lösbar, insbesondere über Schraubverbindungen 44, verbunden ist, sowie aus einem sich axial in Richtung der Einlaßöffnung 10 erstreckenden Haltezapfen 46, der verdrehfest (d.h. gegen Verdrehen um die Rotationsachse 22 gesichert) in einem im zentrischen Bereich der Einlaßöffnung 10 angeordneten, am Gehäuse 2 abgestützten, elastischen Dämpferelement 48 gehalten ist. Das Dämpferelement 48 besteht vorzugsweise aus einem gummielastischen Material und besitzt eine Aufnahmeöffnung 49, in die der Haltezapfen 46 eingreift, wobei der Haltezapfen 46 und die Aufnahmeöffnung 49 einander entsprechende, von der Kreisform abweichende und hierdurch relative Verdrehungen verhindernde Querschnitte besitzen. Das Dämpferelement 48 ist hierbei über mehrere, insbesondere drei, radial und umfänglich verteilt angeordnete, speichenartige Haltestreben 50 verdrehfest am Gehäuse abgestützt, wozu die Haltestreben mit ihren äußeren Enden im die Einlaßöffnung 10 umschließenden Bereich der Seitenwandung 6 mit dieser verschraubt sind.

Weiterhin ist bei der Ausführungsform gemäß Fig. 1 die in dem Drehlager 38 geführte Welle 34 auf der dem Flanschverlängerungselement 40 abgekehrten Seite des Motors 14 angeordnet. Dabei ist dann das das Drehlager 38 halternde Dämpferelement 36 im zentrischen Bereich der Einlaßöffnung 8 angeordnet und - analog zu dem gegenüberliegenden Dämpferelement 48 - über mehrere, insbesondere drei, radial und umfänglich verteilt angeordnete, speichenartige Haltestreben 50 am Gehäuse 2 abgestützt. Vorzugsweise wird hierbei ebenfalls eine relative Verdrehung zwischen dem Dämpferelement 36 und den Haltestreben 50 auf geeignete Weise verhindert.

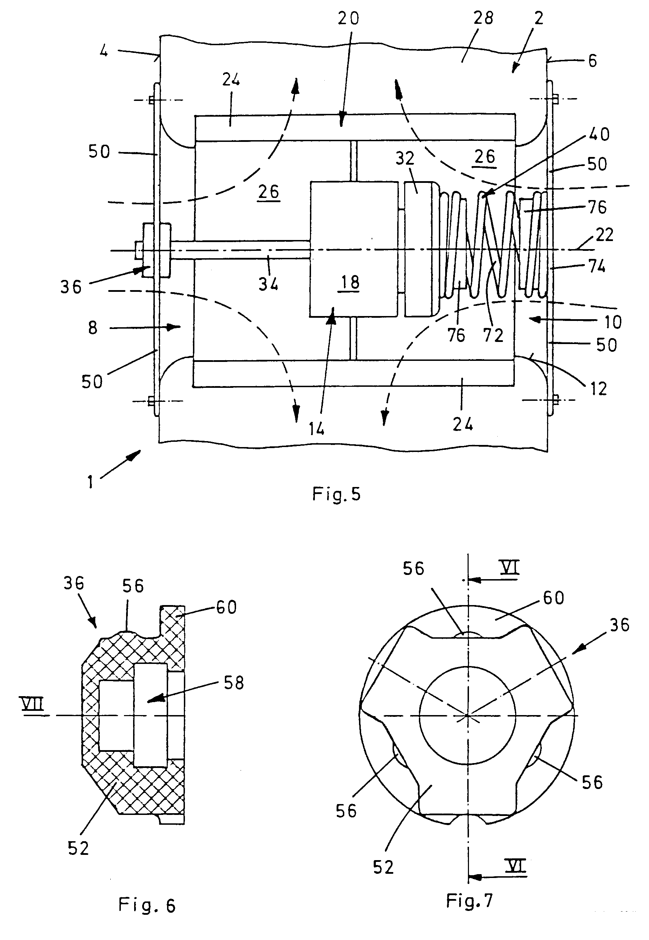

Hierzu wird an dieser Stelle auf die Fig. 6 und 7 verwiesen, in denen das aus einem gummielastischen Material bestehende Dämpferelement 36 gegenüber Fig. 1 vergrößert dargestellt ist. Hieraus ist erkennbar, daß das Dämpferelement 36 einen Einsteckabschnitt 52 aufweist, der in einen inneren, mit den Haltestreben 50 verbundenen Flanschring 54 (Fig.1) einsteckbar ist. Dabei besitzt der Einsteckabschnitt 52 einen von der Kreisform abweichenden Außenquerschnitt, der gemäß Fig. 7 insbesondere etwa dreieckförmig ausgebildet sein kann. Der Flanschring 54 besitzt eine hieran angepaßte Einstecköffnung. Ferner weist der Einsteckabschnitt 52 Rastnocken 56 auf, die im eingesteckten Zustand den Flanschring 54 hintergreifen. Das Dämpferelement 36 besitzt ferner eine Aufnahme 58,in der gemäß Fig.1 das Drehlager 38 form- und/oder kraftschlüssig gehaltert (eingeklipst) ist. Im in den Flanschring 54 eingesteckten Zustand liegt das Dämpferelement 36 mit einem flanschartigen Rand 60 am Flanschring 54 an, so daß folglich der Flanschring 54 zwischen dem Rand 60 und den Rastnocken 56 angeordnet und das Dämpferelement 36 so sicher gehalten ist.

Die weiteren Ausführungsbeispiele gemäß Fig. 2 bis 5 entsprechen jeweils in bestimmten Details der Ausführungsform nach Fig. 1, so daß im folgenden nur noch speziell auf die Unterschiede eingegangen wird.

Gemäß Fig. 2 ist das Flanschverlängerungselement 40 einstückig mit dem Statorflansch 32 ausgebildet, besitzt dabei aber ebenfalls den in dem Dämpferelement 48 gehalterten Haltezapfen 46. Bei dieser Ausführungsform ist zudem von besonderem Vorteil, daß das Flanschverlängerungselement 40 zur Vergrößerung seiner wärmeabgebenden Oberfläche rippenartige Kühlansätze 62, d.h. sog. Kühlrippen, aufweist. Diese Kühlrippen verlaufen bei der Ausführung nach Fig. 2 etwa in axialer Richtung durch den Winkelbereich zwischen dem Statorflansch 32 und dem Haltezapfen 46. Ferner ist hier noch eine vorteilhafte Weiterbildung dargestellt, wonach der Rotor 18 - zusätzlich zu der Welle 34 - mit einer gestrichelt eingezeichneten Antriebswelle 64 verbunden ist, die sich ausgehend von dem Rotor 18 durch axiale Öffnungen des Stators 16, des Statorflansches 32 sowie durch eine kanalartige Öffnung des Flanschverlängerungselementes 40 hindurch axial bis über das Dämpferelement 48 hinaus erstreckt, um mit ihrem freien Ende beispielsweise ein weiteres, nicht dargestelltes Lüfterrad bzw. einen weiteren, motorlosen Ventilator anzutreiben. Im übrigen entspricht diese Ausführungsform derjenigen der Fig. 1.

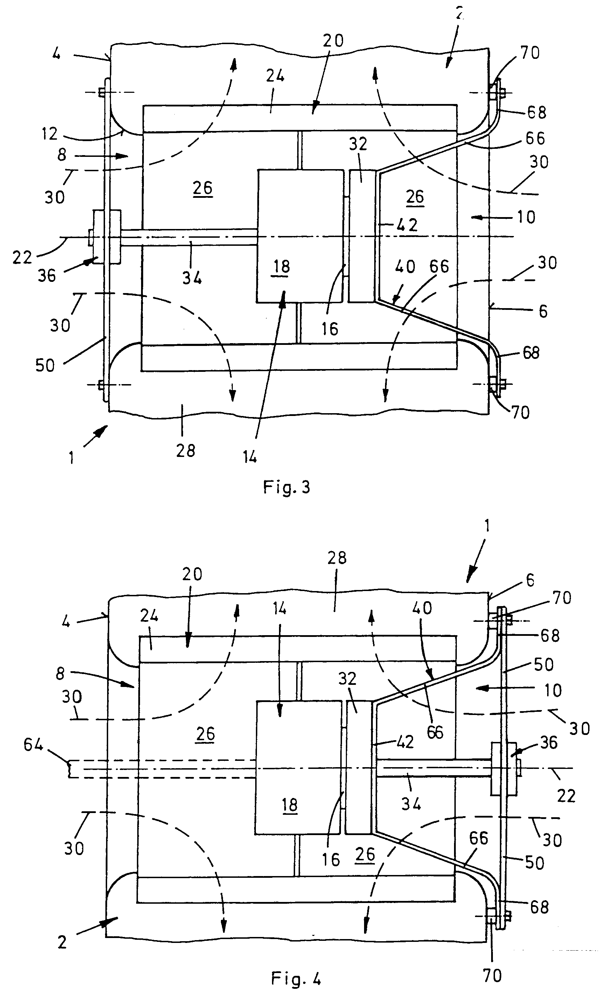

Die Ausführungsform nach Fig. 3 unterscheidet sich von denen der Fig. 1 und 2 durch eine andere Ausgestaltung des Flanschverlängerungselementes 40. Hier weist das Flanschverlängerungselement 40 zwar ebenfalls einen mit dem Statorflansch 32 großflächig und gut wärmeleitend verbundenen Verbindungsabschnitt 42 auf, wobei sich aber an diesen mehrere, insbesondere drei, umfänglich verteilt angeordnete Haltearme 66 anschließen, die sich in Richtung der Einlaßöffnung 10 erstrecken und mit ihren freien, radial nach außen weisenden Endbereichen 68 über jeweils ein elastisches Dämpferelement 70 mit dem die Einlaßöffnung 10 umschließenden Bereich des Gehäuses 2 bzw. der Seitenwandung 6 verbunden sind. Die Haltearme 66 liegen praktisch vollständig in der Strömung des geförderten Mediums, so daß auch hier eine effektive Kühlung gewährleistet ist.

Die Ausführung nach Fig. 4 entspricht hinsichtlich des Flanschverlängerungselementes 40 derjenigen gemäß Fig. 3, jedoch ist hier die mit dem Rotor 18 rotierende Welle 34 nicht auf der dem Statorflansch 42 abgekehrten Seite angeordnet und im Bereich der Einlaßöffnung 8 abgestützt, sondern bei dieser Ausführungsform ist die Welle 34 durch Öffnungen des Stators 16, des Statorflansches 32 und des Verbindungsabschnittes 42 des Flanschverlängerungselementes 40 hindurchgeführt und - ebenso wie das Flanschverlängerungselement 40 - im Bereich der Einlaßöffnung 10 abgestützt, wobei diese Abstützung allerdings derjenigen der übrigen Ausführungen gemäß Fig. 1 bis 3 grundsätzlich entspricht. Bei dieser Ausführung kann dann eine zusätzliche Antriebswelle 64 (gestrichelt eingezeichnet) auf der der Welle 34 abgekehrten Seite mit dem Rotor 18 verbunden und durch die Einlaßöffnung 8 aus dem Gehäuse 2 nach außen geführt sein.

Die Ausführungsform nach Fig. 5 entspricht hinsichtlich der Anordnung und Abstützung der mit dem Rotor 18 rotierenden Welle 34 den Ausführungsformen der Fig. 1 bis 3. Hierbei ist allerdings das Flanschverlängerungselement 40 erfindungsgemäß als Federelement 72, und zwar insbesondere als aus Federstahl bestehende Schraubenfeder, ausgebildet. Somit bildet hier das Flanschverlängerungselement 40 selbst ein elastisches Dämpferelement. Das Federelement 72 ist einendig verdrehfest und metallisch, wärmeleitend mit dem Statorflansch 32 verbunden. Anderendig ist das Federelement 72 drehfest mit einem im zentrischen Bereich der Einlaßöffnung 10 angeordneten und über mehrere, insbesondere drei, radial und umfänglich verteilt angeordnete, speichenartige Haltestreben 50 am Gehäuse 2 befestigten Halteteil 74 verbunden. Vorzugsweise besitzen hierzu sowohl der Statorflansch 32 als auch das Halteteil 74 jeweils einen sich axial erstreckenden Haltezapfen 76 zum Aufstecken des Federelementes 72 Bei dieser vorteilhaften Ausführungsform stellt das Flanschverlängerungselement 40 hinsichtlich seiner Wirkung eine Kombination von Kühl- und Dämpferelement dar.

Die Erfindung ist nicht auf die dargestellten und beschriebenen Ausführungsbeispiele beschränkt, sondern umfaßt auch alle im Sinne der Erfindung gleichwirkenden Ausführungen. Insbesondere können die unterschiedlichen Ausführungen der Abstützung auf beliebige bzw. auf jede geeignete Weise miteinander kombiniert werden.

## Patentansprüche

1. Doppelseitig saugender Radialventilator, bestehend aus einem Gehäuse (2) mit zwei gegenüberliegenden Einlaßöffnungen (8, 10), einem etwa mittig zwischen den Einlaßöffnungen in dem Gehäuse angeordneten Elektro-Außenläufermotor (14) mit einem Stator (16) und einem Rotor (18) sowie aus einem mit dem Rotor zur Rotation um eine durch die Einlaßöffnungen verlaufende Rotationsachse (22) verbundenen, den Motor beidseitig in Richtung der Einlaßöffnungen axial überragenden Radial-Laufrad (20), wobei der Motor elastisch an dem Gehäuse abgestützt ist,
**dadurch gekennzeichnet,** daß der Stator (16) mit einem Statorflansch (32) verbunden ist, wobei der Rotor (18) den Stator (16) nur von einer Seite her etwa bis zu dem Statorflansch (32) umschließt, und daß zur Abstützung des Motors (14) einerseits eine mit dem Rotor (18) rotierende, über den Motor (14) hinaus axial verlängerte Welle (34) in einem über ein elastisches Dämpferelement (36) am Gehäuse (2) gehaltertes Drehlager (38) geführt und andererseits der Statorflansch (32) unmittelbar metallisch, wärmeleitend mit einem ein im Strömungsweg eines zu fördernden Mediums liegendes Kühlelement bildendes Flanschverlängerungselement (40) verbunden und über dieses elastisch sowie gegen Verdrehen gesichert am Gehäuse (2) gehaltert ist.

2. Radialventilator nach Anspruch 1,
**dadurch gekennzeichnet,** daß das Flanschverlängerungselement (40) seine Oberfläche vergrößernde, insbesondere rippenartige Kühlansätze (62) aufweist.

3. Radialventilator nach Anspruch 1 oder 2,
**dadurch gekennzeichnet,** daß das Flanschverlängerungselement (40) lösbar mit dem Statorflansch (32) verbunden, insbesondere verschraubt, ist.

4. Radialventilator nach Anspruch 1 oder 2,
**dadurch gekennzeichnet,** daß das Flanschverlängerungselement (40) unlösbar, z.B. stoffschlüssig, mit dem Statorflansch (32) verbunden, vorzugsweise einstückig mit dem Statorflansch (32) ausgebildet ist.

5. Radialventilator nach einem oder mehreren der Ansprüche 1 bis 4,
**dadurch gekennzeichnet,** daß das Flanschverlängerungselement (40) auf seiner dem Statorflansch (32) abgekehrten Seite einen axialen Haltezapfen (46) aufweist, der verdrehfest in einem im zentrischen Bereich einer (10) der Einlaßöffnungen angeordneten, am Gehäuse (2) abgestützten, elastischen Dämpferelement (48) gehalten ist.

6. Radialventilator nach einem oder mehreren der Ansprüche 1 bis 5,
**dadurch gekennzeichnet,** daß das den Haltezapfen (46) des Flanschverlängerungselementes (40) haltende Dämpferelelement (48) über mehrere,insbesondere drei, radial und umfänglich verteilt angeord nete, speichenartige Haltestreben (50) verdrehfest am Gehäuse (2) abgestützt ist.

7. Radialventilator nach einem oder mehreren der Ansprüche 1 bis 4,
**dadurch gekennzeichnet,** daß das Flanschverlängerungselement (40) ausgehend von seinem mit dem Statorflansch (32) verbundenen Verbindungsabschnitt (42) mehrere, insbesondere drei, umfänglich verteilt angeordnete, sich in Richtung einer (10) der Einlaßöffnungen erstreckende und mit ihren freien Endbereichen (68) über jeweils ein elastisches Dämpferelement (70) mit dem die Einlaßöffnung (10) umschließenden Bereich des Gehäuses (2) verbundene Haltearme (66) aufweist.

8. Radialventilator nach einem oder mehreren der Ansprüche 1 bis 4,
**dadurch gekennzeichnet,** daß das Flanschverlängerungselement (40) als Federelement (72), insbesondere als Schraubenfeder, ausgebildet ist, welches mit seinem dem Statorflansch (32) abgekehrten Ende drehfest mit einem im zentrischen Bereich einer der Einlaßöffnungen (10) angeordneten und über mehrere, insbesondere drei, radial und umfänglich verteilt angeordnete, speichenartige Haltestreben (50) am Gehäuse (2) befestigten Halteteil (74) verbunden ist.

9. Radialventilator nach einem oder mehreren der Ansprüche 1 bis 8,
**dadurch gekennzeichnet,** daß das das Drehlager (38) für die mit dem Rotor (18) rotierende Welle (34) halternde Dämpferelement (36) im zentrischen Bereich einer der Einlaßöffnungen (8/10) angeordnet sowie über mehrere, insbesondere drei, radial und umfänglich verteilt angeordnete, speichenartige Haltestreben (50) am Gehäuse (2) abgestützt und dabei insbesondere gegen Verdrehen gesichert ist.

10. Radialventilator nach einem oder mehreren der Ansprüche 1 bis 9,
**dadurch gekennzeichnet,** daß das Drehlager (38) form- und/oder kraftschlüssig in einer Aufnahme (58) des Dämpferelementes (36) gehaltert ist.

11. Radialventilator nach einem oder mehreren der Ansprüche 1 bis 10,
**dadurch gekennzeichnet,** daß das Flanschverlängerungselement (40) im Bereich der einen Einlaßöffnung (10) und die mit dem Rotor (18) rotierende Welle (34) im Bereich der anderen Einlaßöffnung (8) am Gehäuse (2) abgestützt sind.

12. Radialventilator nach einem oder mehreren der Ansprüche 1 bis 10,
**dadurch gekennzeichnet,** daß das Flanschverlängerungselement (40) und die mit dem Rotor (18) rotierende Welle (34) im Bereich der gleichen Einlaßöffnung (10) am Gehäuse abgestützt sind.

13. Radialventilator nach einem oder mehreren der Ansprüche 1 bis 12,
**gekennzeichnet durch** eine zusätzliche, mit dem Rotor (18) verbundene, sich in zu der am Gehäuse (2) abgestützten Welle (34) entgegengesetzter Richtung axial aus dem Gehäuse (2) nach außen erstreckende Antriebswelle (64) zum Antrieb insbesondere eines weiteren Ventilators.

## Claims

1. A two-inlet radial suction fan comprising a housing (2) with two opposed inlet ports (8, 10), an external electric rotor motor (14) with a stator (16) and a rotor (18) situated approximately midway between the ports, and a radial impeller (20) which is connected to the rotor by means of a drive shaft (22) running through the inlet ports and projecting axially beyond the motor in both directions towards the ports, wherein the motor is supported flexibly by the housing,
characterised in that the stator (16) is connected to a stator flange (32), wherein the rotor (18) encloses the stator (16) from one side and approximately as far as the stator flange (32) only and in that in order to support the motor (14) an extended shaft (34) which rotates with the rotor (18) and, projecting axially beyond the motor (14), runs in a bearing (38) elastically mounted on the housing (2) and the stator flange (32) is directly connected by a heat-conducting metal-to-metal contact to a flange extension member (40) located in the flow path of the impelled medium forming a cooling member, and is thereby fastened to the housing (2) in an elastic and torsion-free manner.

2. A radial fan according to claim 1, characterised in that the flange extension member (40) has cooling members (62), especially rib-shaped members, to increase its surface area.

3. A radial fan according to claims 1 or 2, characterised in that the flange extension member (40) is detachably connected to or in particular bolted to the stator flange (32).

4. A radial fan according to claims 1 or 2, characterised in that the flange extension member (40) is inseparably connected to the stator flange (32), and is preferably constructed as a single piece with the stator flange (32).

5. A radial fan according to one or more of claims 1 to 4, characterised in that the flange extension member (40) has an axial lug (46) on the side away from the stator flange (32) which is held without rotation in the central position of an elastic damping member (48) located in the inlet port (10) supported on the housing.

6. A radial fan according to one or more of claims 1 to 5, characterised in that the damping member (48) holding the lug (46) of the flange extension member (40) is supported by a plurality of, in particular three, spoke-like struts (50) without torsion to the housing (2).

7. A radial fan according to one or more of claims 1 to 4, characterised in that the flange extension member has a plurality of, in particular three, mounting arms (66) which are arranged around the circumference and point towards one of the inlet ports (10) from its connection area (42) to the stator flange (32), each of the free ends (68) of which have a supporting arm connected to the part of the housing (2) surrounding the inlet port (10) by means of an elastic damping member (70).

8. A radial fan according to one or more of claims 1 to 4, characterised in that the flange extension member (40) comprising a spring member (72), in particular a coil spring, which is connected torsion-free at the end furthest from the stator flange (32) to a bracket (74) in the central part of the inlet port (10), and which in turn is connected to the housing (2) by means of a plurality of, in particular three, spoke-like radial arms (50) arranged around the circumference.

9. A radial fan according to one or more of claims 1 to 8, characterised in that the damping member (36), which holds the bearing (38) provided for the shaft (34) rotating with the rotor (18), located in the central area of one of the inlet ports (8/10) and supported by a plurality of, in particular three, radial spoke-like struts (50) arranged round the circumference is supported on the housing (2) and is in particular prevented from rotating.

10. A radial fan according to one or more of claims 1 to 9, characterised in that the bearing (38) is mounted in a shape and/or force-locked recess (58) in the damping member (36).

11. A radial fan according to one or more of claims 1 to 10, characterised in that the flange extension member (40) is mounted on the housing (2) near one inlet port (10), and the shaft (34) rotating with the rotor (18) is mounted near the other inlet port (8).

12. A radial fan according to one or more of claims 1 to 10, characterised in that a flange extension member (40) and the shaft (34) rotating with the rotor (18) are supported on the housing near the same inlet port (10).

13. A radial fan according to one or more of claims 1 to 12, characterised by an additional drive shaft (64) connected to the rotor (18), and running axially out of the housing (2) in the opposite direction to the shaft (34) supported on the housing (2), in particular to drive an additional fan.

## Revendications

1. Ventilateur radial aspirant des deux côtés, comprenant un boîtier (2) avec deux ouvertures d'admission (8, 10) en regard l'une de l'autre, un moteur électrique à induit extérieur (14) disposé dans le boîtier sensiblement à égale distance entre les ouvertures d'admission, ce moteur présentant un stator (16) et un rotor (18), le ventilateur étant également muni d'une roue radiale mobile (20) reliée au rotor pour tourner autour d'un axe de rotation (22) passant par les ouvertures d'admission et faisant axialement saillie, par rapport au moteur, des deux côtés dans la direction des ouvertures d'admission, le moteur étant maintenu élastiquement contre le boîtier, caractérisé par le fait que le stator (16) est relié à une bride de stator (32), le rotor (18) n'entourant le stator (16) que d'un côté sensiblement jusqu'à la bride (32), et en ce que, pour soutenir le moteur (14) d'une part un arbre (34), prolongé axialement au-delà du moteur (14) et tournant avec le rotor (18), est guidé dans un palier de pivotement (38) fixé au boîtier (2) par un élément d'amortissement élastique (36) et, d'autre part, la bride (32) du stator est reliée directement par liaison métallique et de manière thermoconductrice à un élément (40) de prolongement de la bride disposé dans le passage du flux de l'agent à acheminer et servant au refroidissement, la bride (32) étant, grâce à cet élément (40), fixée élastiquement au boîtier (2) de manière à éviter des torsions.

2. Ventilateur radial selon la revendication 1,
caractérisé en ce que l'élément (40) de prolongement de la bride présente des prolongements de refroidissement (62), de préférence en forme de nervures, qui augmentent sa surface.

3. Ventilateur radial selon la revendication 1 ou 2,
caractérisé en ce que l'élément (40) de prolongement de la bride est relié à la bride (32) de manière amovible, en particulier par vissage.

4. Ventilateur radial selon la revendication 1 ou 2,
caractérisé en ce que l'élément (40) est relié à la bride (32) du stator de manière inamovible, par exemple par matière interposée et est de préférence venu d'une pièce avec la bride (32).

5. Ventilateur radial selon l'une ou plusoieurs des revendications 1 à 4,
caractérisé en ce que l'élément (40) présente, sur sa face opposée à la bride (32), une tige axiale (46) maintenue, de manière à éviter des torsions, dans un élément d'amortissement élastique (48) qui s'appuie sur le boîtier (2) et est disposé dans la région centrale de l'une (10) des ouvertures d'admission.

6. Ventilateur radial selon l'une ou plusieurs des revendications 1 à 5,
caractérisé en ce que l'élément d'amortissement (48) qui maintient la tige (46) de l'élément (40) s'appuie sur le boîtier (2) de manière à éviter des torsions par plusieurs, en particulier trois, nervures (50) radiales réparties sur la circonférence.

7. Ventilateur radial selon l'une ou plusieurs des revendications 1 à 4,
caractérisé en ce que l'élément (40) présente, à partir de sa portion de connexion (42) reliée à la bride (32), plusieurs, en particulier trois, bras de maintien (66) qui sont répartis sur la circonférence, s'étendent dans la direction de l'une (10) des ouvertures d'admission et sont reliés par leurs régions d'extrémité libres (68) au moyen d'un élément d'amortissement élastique (70) à la région du boîtier (2) qui entoure l'ouverture d'admission (10).

8. Ventilateur radial selon l'une ou plusieurs des revendications 1 à 4,
caractérisé en ce que l'élément (40) a la forme d'un élément élastique (72), en particulier d'un ressort cylindrique, relié de manière à éviter toute rotation, par son extrémité située à l'opposé de la collerette de stator (32), à un élément de maintien (74) disposé dans la partie centrale de l'une (10) des ouvertures d'admission et fixé au boîtier (2) au moyen de plusieurs, en particulier trois, nervures (50) radiales réparties sur la circonférence.

9. Ventilateur radial selon l'une ou plusieurs des revendications 1 à 8,
caractérisé en ce que le palier de pivotement (38) pour l'élément d'amortissement (36) qui maintient l'arbre (34) tournant avec le rotor (18) est disposé dans la région centrale de l'une des ouvertures (8, 10) d'admission et s'appuie sur le boîtier (2) par plusieurs, en particulier trois, nervures (50) radiales réparties sur la circonférence, en particulier de manière à éviter des torsions.

10. Ventilateur radial selon l'une ou plusieurs des revendications 1 à 9,
caractérisé en ce que le palier de pivotement (38) est maintenu de par sa forme et/ou par l'application d'une force dans un logement (58) de l'élément d'amortissement (36).

11. Ventilateur radial selon l'une ou plusieurs des revendications 1 à 10,
caractérisé en ce que l'élément (40) s'appuie sur le boîtier (2) dans la région de l'une (10) des ouvertures d'admission et l'arbre (34) qui tourne avec le rotor (18), dans la région de l'autre ouverture d'admission (8).

12. Ventilateur radial selon l'une ou plusieurs des revendications 1 à 10,
caractérisé en ce que l'élément (40) et l'arbre (34) qui tourne avec le rotor (18) s'appuient sur le boîtier dans la région de la même ouverture d'admission (10).

13. Ventilateur radial selon l'une ou plusieurs des revendications 1 à 12,
caractérisé par un arbre d'entraînement supplémentaire (64) relié au rotor (18) et faisant axialement saillie vers l'extérieur du boîtier (2) dans la direction opposée à l'arbre (34) qui s'appuie sur le boîtier (2), cet arbre (64) entraînant en particulier un ventilateur supplémentaire.
